# EUROPEAN PATENT APPLICATION

(11) **EP 4 648 161 A1**
(43) Date of publication of application: **12.11.2025**
(21) Application number: 23914942.0
(22) Date of filing: 20.11.2023
(51) Int. Cl.: H01M 10/056, H01M 10/0585, H01M 10/052, H01M 4/505, H01M 4/525, H01M 4/02

(54) **ELECTROLYTIC SOLUTION FOR LITHIUM SECONDARY BATTERY, AND LITHIUM SECONDARY BATTERY COMPRISING SAME**

(30) Priority: 03.01.2023 KR 20230000718
(71) Applicant: SK On Co., Ltd., Seoul 03161 (KR); SK Innovation Co., Ltd., Seoul 03188 (KR)
(72) Inventor: LEE, Minyoung, Daejeon 34124 (KR); KIM, Chanwoo, Daejeon 34124 (KR)
(74) Representative: Stolmár & Partner Patentanwälte PartG mbB
(86) International application number: PCT/KR2023/018623
(87) International publication number: WO 2024/147478

(57) **Abstract**

The present disclosure relates to an electrolytic solution containing a phosphorofluoridate compound for a lithium secondary battery, and a lithium secondary battery comprising the electrolytic solution, wherein the lithium secondary battery comprising the electrolytic solution according to one embodiment produces an output that does not degrade even under high-voltage conditions, has excellent lifespan characteristics, and exhibits excellent storage stability and a high capacity-recovery rate at high temperatures. Additionally or alternatively, the lithium secondary battery comprising the electrolytic solution according to one embodiment has excellent output characteristics resulting from reduced internal resistance of the battery and exhibits excellent cycle characteristics and stability even when charged in high-temperature and high-voltage conditions.

## Description

### [Technical Field]

The following disclosure relates to an electrolytic solution for a lithium secondary battery and a lithium secondary battery comprising the same.

### [Background Art]

Recently, as portable electronic devices have been widely supplied and have become smaller, thinner, and lighter, a study of a secondary battery used as a power source thereof, which has a small size, is lightweight, and may be charged and discharged for a long time, has also been actively conducted.

A lithium secondary battery produces electric energy by oxidation and reduction reactions when lithium ions are inserted into and desorbed from the positive and negative electrodes and is manufactured by charging an organic electrolytic solution or a polymer electrolytic solution between the positive and negative electrodes, using a material allowing insertion and desorption of lithium ions as the positive and negative electrodes.

An organic electrolytic solution which is currently widely used may include ethylene carbonate, propylene carbonate, dimethoxyethane, γ-butyrolactone, N,N-dimethylformamide, tetrahydrofuran, acetonitrile, or the like. However, since the organic electrolytic solution is generally prone to evaporation and is highly inflammable, it causes safety problems at a high temperature such as ignition due to internal short circuit at the time of internal heat generation by overcharge and overdischarge, in application to a lithium ion secondary battery.

Additionally or alternatively, in the lithium secondary battery, lithium ions from a lithium metal oxide which is a positive electrode at initial charge move to a carbon electrode which is a negative electrode and are intercalated in carbon, in which lithium has strong reactivity so that a surface of a carbon particle, which is a negative electrode active material, reacts with an electrolyte, while a coating film which is referred to as a solid electrolyte interface (SEI) film is formed on a surface of the negative electrode.

Performance of the lithium secondary battery greatly depends on a configuration of the organic electrolytic solution and the SEI film formed by the reaction of the organic electrolytic solution and the electrode. That is, the SEI film formed suppresses a side reaction of a carbon material with an electrolyte solvent, for example, decomposition of the electrolytic solution on the surface of the carbon particle which is the negative electrode, prevents collapse of a negative electrode material due to insertion (co-intercalation) of the electrolyte solvent into the negative electrode material, and also fulfills the conventional role as a lithium ion tunnel, thereby minimizing battery performance degradation.

However, as charge and discharge of the lithium secondary battery proceed, a positive electrode active material structurally collapses, so that metal ions are eluted from the surface of a positive electrode, and the eluted metal ions are electrodeposited on a negative electrode to deteriorate the negative electrode. The deterioration phenomenon tends to be further accelerated when a potential of the positive electrode is increased or the battery is exposed to a high temperature. Accordingly, various studies for developing a new organic electrolytic solution including various additives for stabilizing the SEI film have been attempted.

### [Disclosure]

### [Technical Problem]

An object of the present disclosure is to provide an electrolytic solution for a lithium secondary battery which may excellently implement battery characteristics such as high-temperature stability, charge and discharge characteristics, and output characteristics.

Another object of the present disclosure is to provide a lithium secondary battery having excellent battery characteristics such as high-temperature stability, charge and discharge characteristics, and output characteristics.

### [Technical Solution]

In one general aspect, an electrolytic solution for a lithium secondary battery comprises: a lithium salt;
a nonaqueous organic solvent; and
a phosphorofluoridate compound represented by the following Chemical Formula 1: 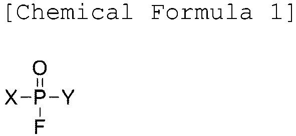
wherein
X and Y are independently of each other -OR¹ or -O⁻M⁺;
R¹ is independently of each other hydrogen; or a C₁₋₁₀ alkyl group, a C₂₋₁₀ alkenyl group, a C₃₋₁₀ cycloalkyl group, or a C₆₋₂₀ aryl group which is unsubstituted or substituted by halogen; and
M is a Group 1 metal of the periodic table.

In another general aspect, a lithium secondary battery comprises: the electrolytic solution for a lithium secondary battery according to an example embodiment, a negative electrode, and a positive electrode.

### [Advantageous Effects]

The present disclosure relates to an electrolytic solution for a lithium secondary battery comprising a phosphorofluoridate compound, and a lithium secondary battery comprising the electrolytic solution, wherein the lithium secondary battery comprising the electrolytic solution according to an example embodiment has excellent life characteristics without output degradation even under high voltage and has a high capacity recovery rate and excellent storage stability at a high temperature. Additionally or alternatively, the lithium secondary battery comprising the electrolytic solution according to an example embodiment has excellent output characteristics due to decreased battery internal resistance and has excellent cycle characteristics and stability even during charging at a high temperature and high voltage.

### [Description of Drawings]

FIG. 1 is a schematic plan view of a lithium secondary battery according to an example embodiment.
FIG. 2 is a cross-sectional view taken along the line I-I' of FIG. 1.

### [Best Mode]

Since the embodiments described in the present specification may be modified in many different forms, the technology according to an example embodiment is not limited to the embodiments set forth herein. Furthermore, throughout the specification, unless otherwise particularly stated, the word "comprise", "equipped", "contain", or "have" does not mean the exclusion of any other constituent element, but means further inclusion of other constituent elements, and elements, materials, or processes which are not further listed are not excluded.

The numerical range used in the present specification includes all values within the range including the lower limit and the upper limit, increments logically derived from the form and breadth of a defined range, all double limited values, and all possible combinations of the upper limit and the lower limit in the numerical range defined in different forms. As an example, when it is defined that a content of a composition is 10% to 80% or 20% to 50%, it should be interpreted that a numerical range of 10% to 50% or 50% to 80% is also described in the specification of the present specification. Unless otherwise defined in the present specification, values which may be outside a numerical range due to experimental error or rounding off of a value are also included in the defined numerical range.

Hereinafter, unless otherwise particularly defined in the present specification, "about" may be considered as a value within 30%, 25%, 20%, 15%, 10%, or 5% of a stated value.

The term "alkyl" and "alkenyl" used in the present specification comprises both straight chain and branched chain forms.

The term "discharge" used in the present specification refers to a process in which a lithium ion is desorbed from a negative electrode, and the term "charge" refers to a process in which a lithium ion is inserted into a negative electrode.

Hereinafter, the electrolytic solution for a lithium secondary battery according to an example embodiment will be described.

An example embodiment provides an electrolytic solution for a lithium secondary battery comprising: a lithium salt; a nonaqueous organic solvent; and a phosphorofluoridate compound represented by the following Chemical Formula 1: 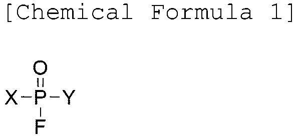 wherein
X and Y are independently of each other -OR¹ or -O⁻M⁺;
R¹ may be identical to or different from each other in X and Y, is independently of each other hydrogen; or a C₁₋₁₀ alkyl group, a C₂₋₁₀ alkenyl group, a C₃₋₁₀ cycloalkyl group, or a C₆₋₂₀ aryl group which is unsubstituted or substituted by halogen; and
M is a Group 1 metal of the periodic table.

The electrolytic solution according to an example embodiment comprises a phosphorofluoridate compound in which one fluorine atom is substituted on a phosphorus (P) atom, thereby having excellently improved battery characteristics such as high-temperature storage quality and output characteristics as compared with a conventional electrolytic solution comprising a phosphorodi-fluoridate compound (for example, LiPO₂F₂, NaPO₂F₂, etc.).

Specifically, a positive electrode active material of the lithium secondary battery structurally collapses as charging and discharging proceed, a metal ion is eluted from the surface of a positive electrode, and the eluted metal ion is electrodeposited on a negative electrode to deteriorate the negative electrode. When the potential of the positive electrode is increased or the battery is exposed to a high temperature, the deterioration phenomenon tends to accelerate further. Additionally or alternatively, when driving voltage is increased, coating film decomposition on the surface of a positive electrode occurs, and the surface of the positive electrode may be exposed to an electrolyte to cause a problem of a side reaction with the electrolyte.

As a means for solving the problem, an example embodiment provides the phosphorofluoridate compound represented by Chemical Formula 1, and the phosphorofluoridate compound comprised in the electrolytic solution according to an example embodiment is coordinated with the transition metal of a positive electrode to further stabilize a positive electrode structure, thereby preventing a battery swelling phenomenon due to gassing during storage at a high temperature, and thus, a thickness increase rate at a high temperature may be significantly lowered and deterioration of life characteristics at room temperature may be prevented even during operation at a high voltage.

In an example embodiment, R¹ may be independently of each other hydrogen; or a C₁₋₅ alkyl group, a C₂₋₅ alkenyl group, a C₃₋₆ cycloalkyl group, or a C₆₋₁₀ aryl group which is unsubstituted or substituted by halogen, or a C₁₋₄ alkyl group, a C₁₋₃ alkyl group, a C₁₋₂ alkyl group, -CH₃, a C₂₋₄ alkenyl group, a C₂₋₃ alkenyl group, a C₃₋₅ cycloalkyl group, a C₅₋₆ cycloalkyl group, a C₆₋₈ aryl group, or a phenyl group which is unsubstituted or substituted by halogen.

In an example embodiment, M may be, for example, Li, Na, K, Rb, Cs, or Fr.

In an example embodiment, the phosphorofluoridate compound may be, for example, a mono-fluorophosphate compound represented by the following Chemical Formula 2: 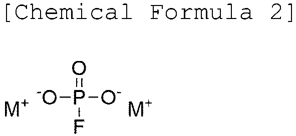 wherein
M is a Group 1 metal of the periodic table.

In an example embodiment, M may be, for example, Li, Na, K, Rb, Cs, or Fr.

A specific example of the mono-fluorophosphate compound represented by Chemical Formula 2 may be a compound represented by the following Chemical Formula 2-1 or a compound represented by the following Chemical Formula 2-2, and thus, the compound represented by the following Chemical Formula 2 may comprise any one or more of a compound represented by the following Chemical Formula 2-1 and a compound represented by the following Chemical Formula 2-2:

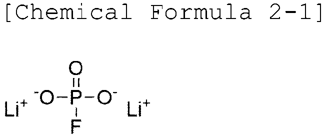

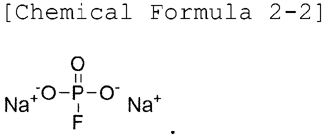

The electrolytic solution for a lithium secondary battery according to an example embodiment may comprise any one or more of the above compounds. However, since the specific compound is only an example of the phosphorofluoridate compound according to an example embodiment, the phosphorofluoridate compound comprised in the electrolytic solution of an example embodiment is not necessarily to the mono-fluorophosphate compound or the above compound, and is not particularly limited as long as it is a phosphorofluoridate compound having a structure in which one fluorine atom is substituted on a phosphorus (P) atom (mono-fluoridated structure).

In an example embodiment, the phosphorofluoridate compound may be comprised at 0.01 wt% to 5.0 wt% with respect to the total weight of the electrolytic solution. Otherwise, it may be comprised at, for example, 0.01 wt% to 3.0 wt%, 0.1 wt% to 5.0 wt%, 0.1 wt% to 4.0 wt%, 0.1 wt% to 3.0 wt%, 0.1 wt% to 2.0 wt%, 0.1 wt% to 1.5 wt%, 0.1 wt% to 1.0 wt%, 0.2 wt% to 0.8 wt%, 0.3 wt% to 0.7 wt%, or about 0.5 wt%. However, since the range is only an example, the present disclosure is not necessarily limited to the range.

The nonaqueous organic solvent comprised in the electrolytic solution according to an example embodiment may comprise a solvent selected from cyclic carbonate solvents, linear carbonate solvents, and mixed solvents thereof. The cyclic carbonate solvent may be selected from the group consisting of ethylene carbonate, propylene carbonate, butylene carbonate, vinylene carbonate, vinylethylene carbonate, fluoroethylene carbonate, and mixtures thereof, and the linear carbonate may be selected from the group consisting of dimethyl carbonate, diethyl carbonate, dipropyl carbonate, ethyl methyl carbonate, methyl propyl carbonate, methyl isopropyl carbonate, ethyl propyl carbonate, and mixtures thereof.

The cyclic carbonate solvent has a high polarity and may sufficiently dissociate lithium ions, but has low viscosity to have low ion conductivity. Therefore, the cyclic carbonate solvent may be used in combination with a linear carbonate solvent having low polarity but low viscosity. In an example embodiment, when the nonaqueous organic solvent comprises both the cyclic carbonate solvent and the linear carbonate solvent (that is, comprises a mixed solvent thereof), a volume ratio between the cyclic carbonate solvent and the linear carbonate solvent may be 1:1 to 1:9, for example, 1:1 to 1:8, 1:1 to 1:6, 1:1 to 1:5, 1:2 to 1:4, or about 1:3.

In an example embodiment, the electrolytic solution may further comprise an additive, in addition to the phosphorofluoridate compound represented by Chemical Formula 1. The additive may comprise, for example, any one or more selected from the group consisting of fluorine-substituted carbonate-based compounds, sulfinyl group-containing compounds, oxalatoborate-based compounds, oxalatophosphate-based compound, and vinylidene carbonate-based compounds.

In an example embodiment, the sulfinyl group-containing compound may be any one or more selected from the group consisting of sulfone-based compounds, sulfite-based compounds, sulfonate-based compounds, sultone-based compounds, and sulfate-based compounds. In an example embodiment, the fluorine-substituted carbonate-based compound may be fluoroethylene carbonate (FEC), and the sulfinyl group-containing compound may be 1,3-propene sultone (PRS), 1,3-propane sultone (PS), or ethylene sulfate (ESA). Therefore, the electrolytic solution according to an example embodiment may further comprise an additive comprising any one or more selected from the group consisting of fluoroethylene carbonate (FEC), 1,3-propene sultone (PRS), 1,3-propane sultone (PS), and ethylene sulfate (ESA) .

The electrolytic solution according to an example embodiment comprises ethylene carbonate (FEC) as the additive together with the phosphorofluoridate compound represented by Chemical Formula 1, and furthermore, may comprise any one or more of 1,3-propene sultone (PRS), 1,3-propane sultone (PS), and ethylene sulfate (ESA).

Otherwise, the electrolytic solution according to an example embodiment may comprise a combination of fluoroethylene carbonate (FEC), 1,3-propene sultone (PRS), 1,3-propane sultone (PS), and ethylene sulfate (ESA) as the additive together with the phosphorofluoridate compound represented by Chemical Formula 1.

Otherwise, the electrolytic solution according to an example embodiment may further comprise lithium difluorobis(oxalato)phosphate (LiPF₂(C₂O₄)₂, LiDFBOP) or lithium bis(oxalato)borate (LiB(C₂O₄)₂, LiBOB) as the additive.

When the electrolytic solution according to an example embodiment comprises the additive, the additive may be comprised at 0.1 wt% to 10.0 wt%, or 0.1 wt% to 8.0 wt%, 0.1 wt% to 6.0 wt%, 0.1 wt% to 5.0 wt%, 1.0 wt% to 5.0 wt%, 1.0 wt% to 4.0 wt%, 2.0 wt% to 4.0 wt%, 2.0 wt% to 3.0 wt%, or about 2.5 wt%.

In an example embodiment, the lithium salt comprised in the electrolytic solution is not particularly limited, but, for example, may be one or two or more selected from the group consisting of LiPF₆, LiBF₄, LiClO₄, LiSbF₆, LiAsF₆, LiN (SO₂C₂F₅)₂, LiN (CF₃SO₂)₂, LiN (SO₃C₂F₅)₂, LiN (SO₂F)₂, LiCF₃SO₃, LiC₄F₉SO₃, LiC₆H₅SO₃, LiSCN, LiAlO₂, LiAlCl₄, LiN (CₓF₂ₓ₊₁SO₂) (C_{y}F_{2y+1}SO₂) (wherein x and y are independently of each other a natural number), LiCl, LiI, and LiB(C₂O₄)₂.

The concentration of the lithium salt may be 0.1 M to 2.0 M, 0.7 M to 1.5 M, or about 1.0 M. When the concentration of the lithium salt is less than 0.1 M, the conductivity of the electrolytic solution is lowered to decrease electrolytic solution performance, and when the concentration is more than 2.0 M, the viscosity of the electrolytic solution is increased to decrease the lithium ion. The lithium salt serves as a source of lithium ions in the battery and allows basic operation of a lithium secondary battery.

Since the electrolytic solution for a lithium secondary battery according to an example embodiment is stable usually at -20°C to 60°C or 40°C to 60°C and maintains electrochemically stable characteristics even at a high voltage in an area of 4.20 V or more, specifically at 4.30 V or more, or 4.35 V or more, based on a positive electrode potential, it may be applied to all lithium secondary batteries such as a lithium ion battery and a lithium polymer battery.

Another example embodiment provides a lithium secondary battery comprising the electrolytic solution for a lithium secondary battery according to an example embodiment, a positive electrode, and a negative electrode.

The lithium secondary battery according to an example embodiment comprises an electrolytic solution comprising a phosphorofluoridate compound in which one fluorine atom is substituted (mono-fluoridated) on a phosphorus (P) atom, thereby having excellently improved battery characteristics such as high-temperature storage quality and output characteristics as compared with a conventional electrolytic solution comprising a phosphorodi-fluoridate compound (for example, LiPO₂F₂).

The phosphorofluoridate compound comprised in the electrolytic solution for a lithium secondary battery according to an example embodiment is coordinated with the transition metal of a positive electrode to further stabilize a positive electrode structure, thereby suppressing a side reaction between the surface of the positive electrode and the electrolytic solution during storage at a high temperature to prevent decomposition of the electrolytic solution, and thus, preventing gassing to effectively suppress a swelling phenomenon in which a battery swells, and thus, the storage stability at a high temperature of the lithium secondary battery may be improved. Additionally or alternatively, cycle life characteristics and stability may be improved even under high temperature and high voltage.

Specifically, the lithium secondary battery manufactured from the electrolytic solution for a lithium secondary battery according to an example embodiment has a very low increase rate of battery thickness of 110% or less when left at a high temperature for a long time and has excellent storage stability at a high temperature.

A non-limiting example of the secondary battery according to an example embodiment comprises a lithium metal secondary battery, a lithium ion secondary battery, a lithium polymer secondary battery, a lithium ion polymer secondary battery, or the like.

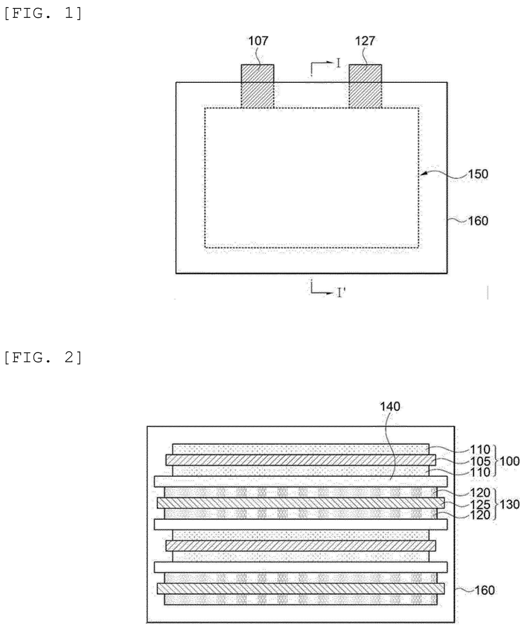

FIGS. 1 and 2 are a schematic plan view and a cross-sectional view showing lithium secondary batteries according to example embodiments, respectively. FIG. 2 is a cross-sectional view taken along the line I-I' of FIG. 1.

Referring to FIGS. 1 and 2, the lithium secondary batteries according to example embodiments may comprise a positive electrode 100 and a negative electrode 130.

The positive electrode 100 may comprise a positive electrode current collector 105 and a positive electrode active material layer 110 formed on the positive electrode current collector 105. For example, the positive electrode active material layer 110 may be formed on one or both surfaces of the positive electrode current collector 105.

For example, the positive electrode active material layer 110 may comprise a positive electrode active material, and, if necessary, a positive electrode binder and a conductive material.

For example, the positive electrode 100 may be manufactured by mixing and stirring a positive electrode active material, a positive electrode binder, a conductive material, a dispersion medium, and the like to prepare a positive electrode slurry, and then applying the positive electrode slurry on the positive electrode current collector 105, drying, and rolling.

For example, the positive electrode current collector 105 may comprise stainless steel, nickel, aluminum, titanium, copper, or an alloy thereof, and preferably, may comprise aluminum or an aluminum alloy.

The positive electrode active material may be a material allowing reversible insertion and desorption of lithium ions. For example, the positive electrode active material may be a lithium metal oxide comprising a metal element such as nickel, cobalt, manganese, and aluminum.

In an example embodiment, the positive electrode active material may comprise lithium metal oxide particles comprising nickel.

In an example embodiment, the lithium metal oxide particles may comprise 80 mol% or more of nickel, based on the total moles of all elements except lithium and oxygen. In this case, a lithium secondary battery having a high capacity may be implemented.

In an example embodiment, the lithium metal oxide particles may comprise 83 mol% or more, 85 mol% or more, 90 mol% or more, or 95 mol% or more of nickel, based on the total moles of all elements except lithium and oxygen.

In an example embodiment, the lithium metal oxide particles may further comprise at least one of cobalt and manganese. In this case, a lithium secondary battery having further improved output characteristics, penetration stability, and the like may be implemented.

In an example embodiment, the lithium metal oxide particles may be represented by a chemical formula of LiₐNiₓM₁₋ₓO_{2+y}. Herein, in the chemical formula, M may be at least one of Co, Mn, Al, Zr, Ti, Cr, B, Mg, Ba, Si, Y, W, Sr, Na, Ca, Hf, V, Nb, Ta, Mo, Fe, Cu, Ag, Zn, Ga, C, Sn, and Zr. In the chemical formula, 0.9≤a≤1.2, 0.5≤x≤0.99, and 0.1≤y≤0.1 may be satisfied.

In an example embodiment, the lithium metal oxide particles may further comprise a doping element. For example, the doping element may comprise at least one of Al, Ti, Ba, Zr, Si, B, Mg, P, Sr, W, and La. In this case, a lithium secondary battery having further improved life characteristics may be implemented.

In an example embodiment, the lithium metal oxide particles may further comprise a coating element. For example, the coating element may comprise at least one of Al, Ti, Ba, Zr, Si, B, Mg, P, Sr, W, and La. In this case, a lithium secondary battery having further improved life characteristics may be implemented.

In an example embodiment, the positive electrode may comprise a composite metal oxide of lithium with any one or more transition metals selected from cobalt, manganese, and nickel as the positive electrode active material, and for example, the positive electrode may comprise a positive electrode active material comprising a lithium-nickel-cobalt-manganese-based composite oxide.

In an example embodiment, the electrolytic solution for a secondary battery comprising the phosphorofluoridate compound and the positive electrode active material comprising a nickel-cobalt-manganese-based active material are applied to a secondary battery together, a swelling phenomenon which is a problem of the nickel-cobalt-manganese-based active material having a high content of nickel and a problem of reduced stability at a high temperature may be solved.

The positive electrode active material according to an example embodiment may be Liₓ(NiₐCo_{b}Mn_{c})O₂ (0.5<x<1.3, 0<a<1, 0<b<1, 0<c<1, a+b+c=1), Liₓ(NiₐCo_{b}Mn_{c})O₄ (0.5<x<1.3, 0<a<2, 0<b<2, 0<c<2, a+b+c=2), or a mixture thereof, or Liₓ(NiₐCo_{b}Mn_{c})O₂ in which 0.90≤x≤1.10, 0.3≤a≤0.9, 0.05≤b<0.5, 0.05≤c<0.5, and a+b+c=1). Otherwise, the positive electrode active material may be, for example, LiNi_{0.6}Co_{0.2}Mn_{0.2}O₂, LiNi_{0.5}CO_{0.2}Mn_{0.3}O₂, LiNi_{0.8}Co_{0.1}Mn_{0.1}O2, LiNi_{1/3}Co_{1/3}Mn_{1/3}O₂, or a mixture thereof.

In an example embodiment, the positive electrode binder may comprise an organic binder such as polyvinylidene fluoride (PVDF), a vinylidene fluoride-hexafluoropropylene copolymer (PVDF-co-HFP), polyacrylonitrile, and polymethylmethacrylate; and a water-based binder such as styrene-butadiene rubber (SBR). Additionally or alternatively, for example, the positive electrode binder may be used with a thickener such as carboxymethyl cellulose (CMC).

In an example embodiment, the conductive material may comprise a carbon-based conductive material such as graphite, carbon black, graphene, and carbon nanotubes; and a metal-based conductive material such as tin, tin oxide, titanium oxide, and a perovskite material such as LaSrCoO₃ and LaSrMnO₃.

A negative electrode 130 may comprise a negative electrode current collector 125 and a negative electrode active material layer formed on the negative electrode current collector 125. For example, the negative electrode active material layer 120 may be formed on one or both surfaces of the negative electrode current collector 125.

For example, the negative electrode active material layer 120 may comprise a negative electrode active material, if necessary, a negative electrode binder and a conductive material.

For example, the negative electrode 130 may be manufactured by mixing and stirring a negative electrode active material, a negative electrode binder, a conductive material, a solvent, and the like to prepare a negative electrode slurry, and then applying the negative electrode slurry on the negative electrode current collector 125, drying, and rolling.

For example, the negative electrode current collector 125 may comprise gold, stainless steel, nickel, aluminum, titanium, copper, or an alloy thereof, and preferably, may comprise copper or a copper alloy.

For example, the negative electrode active material may be a material capable of adsorbing and desorbing lithium ions. For example, the negative electrode active material may comprise a lithium alloy, a carbon-based material, a silicon-based material, and the like.

For example, the lithium alloy may comprise a metal element such as aluminum, zinc, bismuth, cadmium, antimony, silicon, lead, tin, gallium, and indium.

For example, the carbon-based active material may comprise crystalline carbon, amorphous carbon, a carbon composite, carbon fiber, and the like.

For example, the amorphous carbon may comprise hard carbon, coke, mesocarbon microbead (MCMB) fired at 1500°C or lower, mesophase pitch-based carbon fiber (MPCF), and the like.

For example, the crystalline carbon may comprise natural graphite, artificial graphite, graphitized coke, graphitized MCMB, graphitized MPCF, and the like.

For example, the negative electrode active material may comprise a silicon-based active material. For example, the silicon-based active material may comprise Si, SiOₓ(0<x<2), a silicon-carbon composite material (Si/C), SiO/C, Si-metal, and the like. In this case, a lithium secondary battery having a high capacity may be implemented.

For example, when the negative electrode active material comprises a silicon-based active material, a problem of an increased battery thickness during repeated charging and discharging may arise. The lithium secondary battery according to example embodiments may reduce an increase rate of battery thickness by comprising the electrolytic solution.

In an example embodiment, a content of the silicon atom in the negative electrode active material may be 1 wt% to 20 wt%, 1 wt% to 15 wt%, or 1 wt% to 10 wt%.

The negative electrode binder and the conductive material may be substantially the same material as or similar materials to the positive electrode and the conductive material described above. For example, the negative electrode binder may be a water-based binder such as styrene-butadiene rubber (SBR). Additionally or alternatively, for example, the negative electrode binder may be used with a thickener such as carboxymethyl cellulose (CMC).

The electrolytic solution according to an example embodiment may form an cathode electrolyte interphase having excellent stability on the surface of an electrode. Accordingly, a side reaction between the electrode active material (for example, a lithium metal oxide, a carbon-based material, and a silicon-based material) and an electrolytic solution may be effectively suppressed.

In an example embodiment, the area of the negative electrode 130 may be larger than the area of the positive electrode 100. In this case, lithium ions produced from the positive electrode 100 may move to the negative electrode 130 well without being precipitated in the middle.

For example, the positive electrode 100 and the negative electrode 130 may be placed alternately and repeatedly to form an electrode assembly 150.

In an example embodiment, a separator 140 may be interposed between the positive electrode 100 and the negative electrode 130. For example, the electrode assembly 150 may be formed by winding, stacking, zigzag-folding (z-folding), and the like of the separator 140.

For example, the separator 140 may comprise a porous polymer film manufactured from a polyolefin-based polymer such as an ethylene homopolymer, a propylene homopolymer, an ethylene-butene copolymer, an ethylene/hexene copolymer, and an ethylene/methacrylate copolymer. Additionally or alternatively, for example, the separator 140 may comprise non-woven fabric formed of glass fiber having a high melting point, polyethylene terephthalate fiber, and the like.

The lithium secondary batteries according to example embodiments may comprise a positive electrode lead 107 which is connected to the positive electrode 100 and protrudes out of a case 160; and a negative electrode lead 127 which is connected to the negative electrode 130 and protrudes out of the case 160.

For example, the positive electrode 100 and the positive electrode lead 107 may be electrically connected. Likewise, the negative electrode 130 and the negative electrode lead 127 may be electrically connected.

For example, the positive electrode lead 127 may be electrically connected to the positive electrode current collector 105. Additionally or alternatively, the negative electrode lead 130 may be electrically connected to the negative electrode current collector 125.

For example, the positive electrode current collector 105 may comprise a projection part (positive electrode tab, not shown) in one side. On the positive electrode tab, the positive electrode active material layer 110 may not be formed. The positive electrode tab may be integrated with the positive electrode current collector 105 or connected by welding and the like. The positive electrode current collector 105 and the positive electrode lead 107 may be electrically connected by the positive electrode tab.

Likewise, the negative electrode current collector 125 may comprise a protrusion part (negative electrode tab, not shown) in one side. On the negative electrode tab, the negative electrode active material layer 120 may not be formed. The negative electrode tab may be integrated with the negative electrode current collector 125 or connected by welding and the like. The negative electrode current collector 125 and the negative electrode lead 127 may be electrically connected by the negative electrode tab.

For example, the electrode assembly 150 may comprise a plurality of positive electrodes and a plurality of negative electrodes. For example, the plurality of positive electrodes and negative electrodes may be placed alternately, and a separator may be interposed between the positive electrode and the negative electrode. Accordingly, the lithium secondary battery according to an example embodiment may comprise a plurality of positive electrode tabs and a plurality of negative electrode tabs which protrude from each of the plurality of positive electrodes and the plurality of negative electrodes.

For example, the positive electrode tabs (or negative electrode tabs) may be stacked, compressed, and welded to form a positive electrode tab laminate (or negative electrode tab laminate). The positive electrode tab laminate may be electrically connected to the positive electrode lead 107. Additionally or alternatively, the negative electrode tab laminate may be electrically connected to the negative electrode lead 127.

The electrode assembly 150 and the electrolytic solution according to example embodiments of the present disclosure described above described above may be accommodated in a case 160 to form a lithium secondary battery.

The lithium secondary battery may be manufactured for example, in a cylindrical, rectangular, pouch, or coin shape, and the like.

Hereinafter, the examples and the experimental examples will be illustrated specifically in detail in the following. However, since the examples and the experimental examples described later only illustrate a part of one example embodiment, the technology described in the present specification should not be construed as being limited thereto.

### [Best Mode for Carrying Out the Invention]

### <Examples 1 to 8> Manufacture of lithium secondary battery

Ethylene carbonate (EC): LiPF₆ was dissolved in a mixed solvent of ethylene carbonate (EC): ethyl methyl carbonate (EMC) at a volume ratio of 25:75 to be a 1.0 M solution, thereby manufacturing a nonaqueous electrolytic solution to be used in a lithium secondary battery, which was used as a basic electrolytic solution (1.0 M LiPF₆, EC/EMC = 25/75). Next, components described in the following Table 1 were further added for the manufacture.

A battery to which the non-aqueous electrolyte was applied was manufactured as follows:
Li[Ni_{0.8}Co_{0.1}Mn_{0.1}]O₂, carbon black, and polyvinylidene fluoride (PVDF) as a positive electrode active material were dispersed in NMP at a weight ratio of 98:1:1 to prepare a positive electrode slurry. The positive electrode slurry was uniformly applied on an area excluding a protrusion part of an aluminum foil having the protrusion part (positive electrode tab) on one side, and dried and rolled to manufacture a positive electrode.

A negative electrode active material of Si/C and graphite at a weight ratio of 15:85, styrene-butadiene rubber (SBR), and carboxymethyl cellulose (CMC) were dispersed in water at a weight ratio of 97:1:2 to manufacture a negative electrode slurry. The negative electrode slurry was uniformly applied on an area excluding a protrusion part of a copper foil having the protrusion part (negative electrode tab) on one side, and dried and rolled to manufacture a negative electrode.

A polyethylene separator (thickness: 13 µm) was interposed between the positive electrode and the negative electrode to form an electrode assembly. The positive electrode lead and the negative electrode lead were connected to the positive electrode tab and the negative electrode tab by welding, respectively. The electrode assembly was accommodated in a pouch so that some areas of the positive electrode lead and the negative electrode lead were exposed to the outside, and 3 sides except an electrolytic solution injection part surface were sealed.

The electrolytic solution manufactured above was injected into the pouch, and the electrolytic solution injection part side was sealed to manufacture a lithium secondary battery.

### <Comparative Examples 1 and 2> Manufacture of lithium secondary battery

Lithium secondary batteries were manufactured in the same manner as in the above examples, except that components to be added to the electrolytic solution were as shown in the following Table 1.

### <Reference Examples 1 to 4> Manufacture of lithium secondary battery

Lithium secondary batteries were manufactured in the same manner as in the above examples, except that components to be added to the electrolytic solution were as shown in the following Table 1.

**[Table 1]**

| | Compound additive | | Additive (content) (wt%) | | | |
|---|---|---|---|---|---|---|
| | Type | Content (wt%) | FEC | PRS | PS | ESA |
| Example 1 | Chemical Formula 2-1 | 0.01 | 1 | 0.5 | 0.5 | 0.5 |
| Example 2 | Chemical Formula 2-1 | 0.1 | 1 | 0.5 | 0.5 | 0.5 |
| Example 3 | Chemical Formula 2-1 | 0.5 | 1 | 0.5 | 0.5 | 0.5 |
| Example 4 | Chemical Formula 2-1 | 1.0 | 1 | 0.5 | 0.5 | 0.5 |
| Example 5 | Chemical Formula 2-1 | 3.0 | 1 | 0.5 | 0.5 | 0.5 |
| Example 6 | Chemical Formula 2-2 | 0.1 | 1 | 0.5 | 0.5 | 0.5 |
| Example 7 | Chemical Formula 2-2 | 0.5 | 1 | 0.5 | 0.5 | 0.5 |
| Example 8 | Chemical Formula 2-2 | 3.0 | 1 | 0.5 | 0.5 | 0.5 |
| Comparative Example 1 | Chemical Formula 3 | 0.5 | 1 | 0.5 | 0.5 | 0.5 |
| Comparative Example 2 | - | - | 1 | 0.5 | 0.5 | 0.5 |
| Reference Example 1 | Chemical Formula 2-1 | 0.005 | 1 | 0.5 | 0.5 | 0.5 |
| Reference Example 2 | Chemical Formula 2-1 | 6.0 | 1 | 0.5 | 0.5 | 0.5 |
| Reference Example 3 | Chemical Formula 2-2 | 6.0 | 1 | 0.5 | 0.5 | 0.5 |
| Reference Example 4 | Chemical Formula 2-2 | 7.0 | 1 | 0.5 | 0.5 | 0.5 |

(The wt% is based on the total weight of the electrolytic solution, and all electrolytic solutions included the following basic electrolytic solution.)
* Basic electrolytic solution: 1.0 M LiPF₆, EC/EMC = 25/75
* FEC: fluoroethylene carbonate
* PRS: 1,3-propene sultone
* PS: 1,3-propane sultone
* ESA: ethylene sulfate
* Phosphorofluoridate compound (Chemical Formula 2-1): 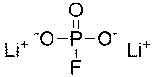 (available from SK INNOVATION)
* Phosphorofluoridate compound (Chemical Formula 2-2): 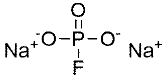 (available from SK INNOVATION)
* Phosphorodi-fluoridate compound (Chemical Formula 3): 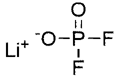 (available from EnChem)

### <Experimental Example> Evaluation of lithium secondary battery

In order to evaluate the performance of the lithium secondary batteries manufactured in Examples 1 to 8, Comparative Examples 1 and 2, and Reference Examples 1 to 4, the following experiment was carried out, and the results are shown in the following Table 2.

### <Evaluation method>

### 1. Evaluation of initial performance

### 1) Discharge capacity

A lithium secondary battery was charged (CC-CV 0.5 C 4.2 V 0.05 C CUT-OFF) and discharged (CC 0.5 C 3.0 V CUT-OFF) repeatedly 3 times at room temperature (25°C).

### 2) Thickness

The thickness of the lithium secondary battery after being discharged by the above method was measured.

### 3) D_DCIR (discharge DCIR)

A lithium secondary battery was charged to SOC (state of discharge) of 60%. At 60% of SOC, the battery was discharged for 10 seconds, respectively, while changing a C-rate to 0.2 C, 0.5 C, 1.0 C, 1.5 C, 2.0 C, and 2.5 C. The voltage when the discharge proceeded was plotted and the slope was adopted as D_DCIR.

### 2. Evaluation of storage stability at 60°C (5 weeks)

A lithium secondary battery was left in a chamber at 60°C, and the following evaluation was performed.

### 1) Thickness increase rate

An initial thickness before a lithium secondary battery was left in a chamber at 60°C was measured using a flat plate thickness measuring device (Mitutoyo, 543-490B). A thickness of the lithium secondary battery after being left in a chamber at 60°C for 5 weeks was measured using the same device. The thickness measured after being left was divided by the initial thickness to calculate the thickness increase rate as a percentage. Thickness increase rate (%) = (battery thickness after stored at high temperature/initial battery thickness)*100

### 2) Resistance increase rate (Ret.)

A lithium secondary battery was left in a chamber at 60°C for 5 weeks, and D_DCIR was measured in the same manner as in "3) D_DCIR of 1. Evaluation of initial performance".

The measured D_DCIR was divided by the initial D_DCIR measured in "3) D_DCIR of 1. Evaluation of initial performance" and the resistance increase rate was calculated as a percentage. Resistance increase rate (%) = (D_DCIR after being stored at high temperature/initial D_DCIR)*100

### 3) Capacity recovery rate (Rec.)

A lithium secondary battery was left in a chamber at 60°C for 5 weeks and then discharged (CC 1. C 3.0 V CUT-OFF) once. Next, the lithium secondary battery was charged (CC-CV 1.0 C 4.2 V 0.05 C CUT-OFF) and discharged (CC 1.0 C 3.0 V CUT-OFF) once, respectively to measure a discharge capacity.

The measured discharge capacity was divided by the initial discharge capacity measured in "1) Discharge capacity of 1. Evaluation of initial performance" and the capacity recovery rate was calculated as a percentage. Capacity recovery rate (%) = (discharge capacity after being stored at high temperature/initial discharge capacity)*100

### 3. Evaluation of output characteristics at -10°C

### 1) Discharge capacity

A lithium secondary battery was charged (CC-CV 1.0 C 4.2 V 0.05 C CUT-OFF) and discharged (CC 1.0 C 3.0 V CUT-OFF) once, respectively at -10°C, and a charge capacity and a discharge capacity at a low temperature were measured.

### 2) C_DCIR (charge DCIR) and D_DCIR (discharge DCIR)

A lithium secondary battery was charged to SOC (state of discharge) of 60% at -10°C. At 60% of SOC, the battery was discharged and auxiliarily charged for 10 seconds, respectively, while changing a C-rate to 0.2 C, 0.5 C, 1.0 C, 1.5 C, 2.0 C, and 2.5 C. The voltage when the discharge and auxiliary charge proceeded was plotted and the slope was adopted as D_DCIR and C_DCIR.

**[Table 2]**

| | Initial performance | | | Evaluation of storage stability at 60°C (5 weeks) | | | | Output characteristics at -10°C | | |
|---|---|---|---|---|---|---|---|---|---|---|
| | Discharge capacity (mAh) | Coulomb efficiency (%) | D_DCIR (mΩ) | Thickness increase rate (%) | D_DCIR (mΩ) | Ret. (%) | Rec. (%) | Discharge capacity (mAh) | C_DCIR (mΩ) | D_DCIR (mΩ) |
| Example 1 | 1728 | 82.5 | 46.7 | 110 | 44.8 | 93 | 92 | 1131.3 | 170.1 | 159.0 |
| Example 2 | 1730 | 82.7 | 40.6 | 105 | 44.1 | 93 | 92.5 | 1184.7 | 155.1 | 149.5 |
| Example 3 | 1736 | 83 | 39.8 | 96 | 43.7 | 94 | 94 | 1205.5 | 146.0 | 144.1 |
| Example 4 | 1740 | 83.5 | 38.5 | 96 | 42.5 | 96 | 95 | 1269.2 | 135.0 | 131.3 |
| Example 5 | 1732 | 82.3 | 40.3 | 105 | 44.6 | 93 | 92 | 1178.3 | 158.0 | 147.3 |
| Example 6 | 1756 | 82.4 | 35.8 | 110 | 42.8 | 93 | 94 | 1178.3 | 168.7 | 165.9 |
| Example 7 | 1757 | 82.6 | 36.7 | 108 | 41.8 | 94 | 95 | 1201.1 | 163.8 | 160.9 |
| Example 8 | 1750 | 82.1 | 37.7 | 110 | 43.1 | 93 | 92 | 1168.5 | 170.1 | 168.2 |
| Comparative Example 1 | 1727 | 81.3 | 49.6 | 118 | 45.0 | 93 | 91 | 1126.3 | 179.1 | 178.0 |
| Comparative Example 2 | 1708 | 80.4 | 48.6 | 128 | 52.5 | 86 | 83 | 1109.1 | 187.1 | 175.0 |
| Reference Example 1 | 1727 | 82.6 | 47.6 | 112 | 44.9 | 93 | 92 | 1129.5 | 173.3 | 165.0 |
| Reference Example 2 | 1728 | 80.3 | 44.9 | 108 | 44.9 | 93 | 92 | 1151.2 | 155.7 | 156.8 |
| Reference Example 3 | 1743 | 81.3 | 39.3 | 114 | 44.3 | 93 | 92 | 1160.3 | 173.6 | 170.5 |
| Reference Example 4 | 1742 | 81.3 | 39.8 | 114 | 44.8 | 93 | 92 | 1153.1 | 175.1 | 172.6 |

As confirmed from Table 2, the lithium secondary batteries of the examples and the reference examples which were manufactured from the electrolytic solution comprising the phosphorofluoridate compound had a higher initial capacity than the lithium secondary batteries of the comparative examples including the phosphorodi-fluoridate compound, and had decreased D_DCIR due to an optimized bonding force between the compound and the transition metal of the positive electrode.

Additionally or alternatively, the lithium secondary batteries of the examples all had the thickness increase rate of 110% or less after being left at 60°C for 5 weeks, which was effectively decreased as compared with the lithium secondary batteries according to the comparative examples, and thus, was found to have excellent long-term stability at a high temperature. Additionally or alternatively, the lithium secondary batteries of the examples showed a higher capacity and a lower resistance (C_DCIR) even at a low temperature of -10°C than the lithium secondary batteries of the comparative examples.

Hereinabove, though an implementation has been described in detail by the examples and the experimental examples, the scope of an implementation is not limited to specific examples, and should be construed by the appended claims.

## Claims

1. An electrolytic solution for a lithium secondary battery comprising:
a lithium salt;
a nonaqueous organic solvent; and
a phosphorofluoridate compound represented by the following Chemical Formula 1: 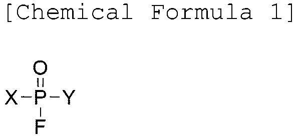
wherein
X and Y are independently of each other -OR¹ or -O⁻M⁺;
R¹ is independently of each other hydrogen; or a C₁₋₁₀ alkyl group, a C₂₋₁₀ alkenyl group, a C₃₋₁₀ cycloalkyl group, or a C₆₋₂₀ aryl group which is unsubstituted or substituted by halogen; and
M is a Group 1 metal of the periodic table.

2. The electrolytic solution for a lithium secondary battery of claim 1, wherein R¹ is independently of each other hydrogen; or a C₁₋₅ alkyl group, a C₂₋₅ alkenyl group, a C₃₋₆ cycloalkyl group, or a C₆₋₁₀ aryl group which is unsubstituted or substituted by halogen.

3. The electrolytic solution for a lithium secondary battery of claim 1, wherein M is Li, Na, K, Rb, Cs, or Fr.

4. The electrolytic solution for a lithium secondary battery of claim 1, wherein the phosphorofluoridate compound is a compound represented by the following Chemical Formula 2: 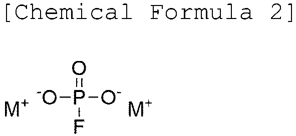 wherein
M is a Group 1 metal of the periodic table.

5. The electrolytic solution for a lithium secondary battery of claim 4, wherein the phosphorofluoridate compound comprises any one or more of a compound represented by the following Chemical Formula 2-1 and a compound represented by the following Chemical Formula 2-2:

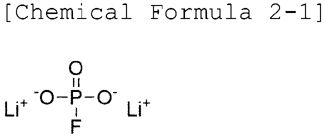

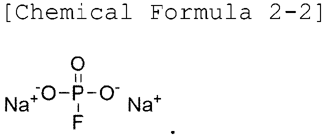

6. The electrolytic solution for a lithium secondary battery of claim 1, wherein the phosphorofluoridate compound is comprised at 0.01 wt% to 5.0 wt% with respect to the total weight of the electrolytic solution.

7. The electrolytic solution for a lithium secondary battery of claim 1, wherein the nonaqueous organic solvent comprises a solvent selected from cyclic carbonate solvents, linear carbonate solvents, and mixed solvents thereof.

8. The electrolytic solution for a lithium secondary battery of claim 7, wherein the cyclic carbonate solvent and the linear carbonate solvent are comprised at a volume ratio of 1:1 to 1:9.

9. The electrolytic solution for a lithium secondary battery of claim 1, further comprising: any one or more additives selected from the group consisting of fluorine-substituted carbonate-based compounds, sulfinyl group-containing compounds, oxalatoborate-based compounds, oxalatophosphate-based compound, and vinylidene carbonate-based compounds.

10. The electrolytic solution for a lithium secondary battery of claim 9, wherein the sulfinyl group-containing compound is any one or more selected from the group consisting of sulfone-based compounds, sulfite-based compounds, sulfonate-based compounds, sultone-based compounds, and sulfate-based compounds.

11. The electrolytic solution for a lithium secondary battery of claim 9, wherein the additive comprises any one or more selected from the group consisting of fluoroethylene carbonate (FEC), 1,3-propene sultone (PRS), 1,3-propane sultone (PS), and ethylene sulfate (ESA).

12. The electrolytic solution for a lithium secondary battery of claim 9, wherein the additive is comprised at 0.1 wt% to 10.0 wt% with respect to the total weight of the electrolytic solution.

13. A lithium secondary battery comprising a positive electrode, a negative electrode, and the electrolytic solution for a lithium secondary battery of any one of claims 1 to 12.

14. The lithium secondary battery of claim 13, wherein the positive electrode comprises a composite metal oxide of lithium with any one or more transition metals selected from cobalt, manganese, and nickel as a positive electrode active material.

15. The lithium secondary battery of claim 13, wherein the positive electrode comprises a positive electrode active material comprising a lithium-nickel-cobalt-manganese-based composite oxide.
